Europäisches Patentamt

European Patent Office

Office européen des brevets

(19)

(11) Publication number: **0 139 703**
**B1**

(12) EUROPEAN PATENT SPECIFICATION

(45) Date of publication of patent specification: **18.01.89**

(51) Int. Cl.⁴: **G 01 F 11/10**

(21) Application number: **84901553.2**

(22) Date of filing: **27.03.84**

(86) International application number:
**PCT/US84/00470**

(87) International publication number:
**WO 84/03941 11.10.84 Gazette 84/24**

(54) SPREADER FOR PARTICULATE MATERIAL.

(30) Priority: **29.03.83 US 480027**

(43) Date of publication of application:
**08.05.85 Bulletin 85/19**

(45) Publication of the grant of the patent:
**18.01.89 Bulletin 89/03**

(84) Designated Contracting States:
**AT BE CH DE FR GB LI LU NL SE**

(56) References cited:
**GB-A-2 087 356**
**US-A-1 455 133**
**US-A-2 855 891**
**US-A-2 995 107**
**US-A-3 166 222**
**US-A-3 391 831**
**US-A-3 528 386**
**US-A-3 606 965**
**US-A-3 768 203**
**US-A-4 264 023**

(73) Proprietor: **BURFORD CORP.**
**Route 1**
**Maysville, OK 73057 (US)**

(72) Inventor: **BURFORD, Charles, E. 2100 Skyway
Tower**
**Southland Center 400 Olive Street Box 8**
**Dallas, TX 75201 (US)**

(74) Representative: **Howick, Nicholas Keith et al
CARPMAELS & RANSFORD 43 Bloomsbury
Square**
**London WC1A 2RA (GB)**

Courier Press, Leamington Spa, England.

## Description

Heretofore apparatus for dispensing particulate material such as sesame seeds onto the upper surface of bakery products such as hamburger buns has been unduly complicated, difficult to maintain and inaccurate in dispensing controlled quantitites of the particulate material. Such devices have generally comprised horizontally disposed screens or discs having openings formed therein adjacent the bottom of a hopper, for example as disclosed in US—A—3 528 386.

Difficulty has been encountered in dispensing fragile particulate material because of the grinding or milling which results from movements of members employed for dispensing metered quantities of the material. The milling or grinding of material being dispensed detracts from the appearance of the product.

In GB—A—2 08 356 is disclosed a rotary valve for use in regulating the flow of particulate material. The valve consists of a casing with inlet and outlet conduits and a rotor mounted for rotation about a horizontal axis in the casing. The rotor has a ring of open and closed pockets to meter the particulate material passing through the valve and its periphery is spaced inwardly from the interior of the casing an amount sufficient to prevent squeezing and disintegration of the particulate material between the rotor and inlet conduit. Baffle means are provided to prevent particulate material from flowing downwardly in the space between the rotor and casing at the up-turning of the rotor.

In US—A—3 391 831 is disclosed a dry solids fertilizer applicator which comprises a hopper feeding into a fluted metering rotor contained in a cylindrical housing. Between the rotor and the housing is a fiberglass liner tube with a rectangular inlet and outlet openings. The metering rotor has its longitudinal axis offset from the axis of the cylindrical housing.

In US—A—4 264 023 is disclosed a mechanism for dispensing seed or fertilizer etc. having a rotatable dispensing roller which, as it rotates, dispenses material from a hopper through a nip defined by the roller and an adjacent dispensing member. The roller has a circumferentially extending slowrate band, occupying for example one sixth of the axial length of the roller. Material being dispensed can be selectively confined to the slow rate band by removable confinement members, so that the rate of dispensing is reduced by a factor of six (for example) at a given rate of roller rotation. The material confinement members cooperate with a circumferentially extending sealing formation such as a rib or grooves on the roller, so as to seal the slow rate band against lateral escape of material being dispensed.

Thus the present invention relates to a spreader for dispensing fragile particulate material onto an article carried by a conveyor comprising:-

a container having an elongated opening formed therein;

a dispensing tube having a hollow cylindrical bore, said tube extending longitudinally of said opening, said tube having longitudinally extending inlet and outlet passages formed therein, said inlet passage communicating with the inside of the container and with the bore of the tube and the exterior of the container:

a motor associated with a generally cylindrical mandrel and drivingly connected to a clutch; and

a mandrel rotatably disposed in said bore.

The invention is characterised by said mandrel being coaxial with said bore and being formed to divide the bore of the tube into spaced dispensing sections separated by spaced blocking collars on said mandrel, said blocking collars having an outside diameter substantially equal to the diameter of the bore through the tube to prevent passage of particulate material from one dispensing section longitudinally of the tube to an adjacent dispensing section;

means on the surface of the mandrel extending radially therefrom between said blocking collars, said means on the surface having a major diameter which is less than the diameter of the bore, the spacing between the major diameter of the mandrel and the diameter of the bore being greater than the maximum dimension of individual particles of material being dispensed to prevent destruction of the particles being dispensed but being spaced sufficiently close together to prevent gravity flow of particles through the bore when the mandrel is not rotating;

sensor means positioned to energise said clutch when an article on the conveyor to receive particulate material is positioned in a predetermined relationship relative to said tube and to disengage said clutch when the article on the conveyor is moved away from said pre-determined position.

In its preferred form the dispensing apparatus is devised to permit installation of different mandrels in the dispensing tube for dispensing different materials and for adjusting the number of dispensing sections through which particulate material is to be dispensed. A clutch drivingly connected to the mandrel is energized by a switching upon arrival of an article which is to receive particulate material and is disengaged upon departure of the article.

Description of Drawing

Drawings of a preferred embodiment of the invention are annexed hereto so that the invention may be better and more fully understood, and which:-

Figure 1 is a perspective view of a spreader for particulate material associated with a conveyor;

Figure 2 is a diagrammatic illustration of the spreader and the controlled system associated therewith; and

Figure 3 is an elevational view of the mandrel.

Numeral references are employed to designate like parts throughout the various figures of the drawings.

## Description of a Preferred Embodiment

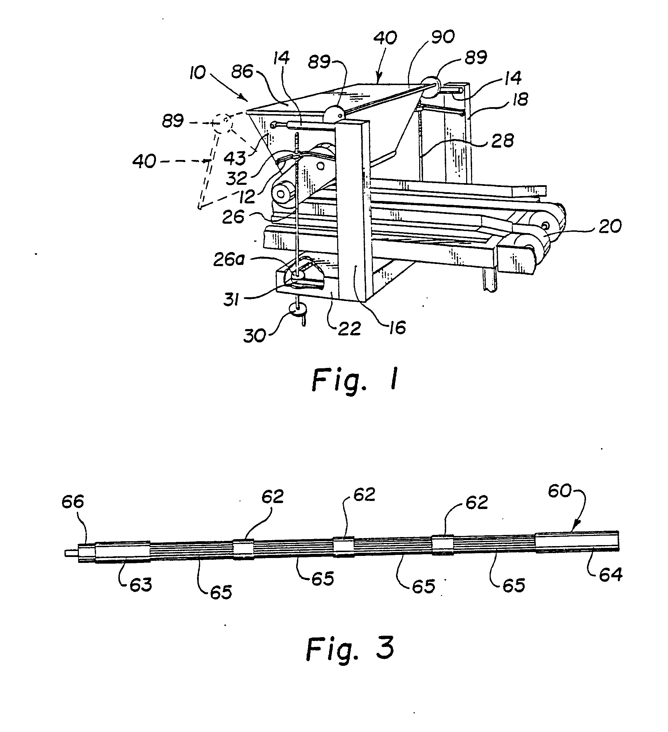

A preferred embodiment of the spreader for particulate material is illustrated in Figures 1-3 of the drawing.

Referring to Figure 1 of the drawing, the numeral 10 generally designates a spreader for particulate material pivotally secured by parallel lengths 12 and 14 to vertical stanchions 16 and 18 adjacent opposite sides of a conveyor 20 for dispensing and spreading particulate material over the upper surface of articles carried by conveyor 20 below spreader 10. Stanchions 16 and 18 are secured to the opposite sides of a hollow frame 22 having a pair of elevating screws 26 and 28 rotatably secured thereto. Elevating screws 26 and 28 have sprockets 26a and 27a, respectively, secured thereto such that rotation of hand wheel 30 on sprocket 26 imparts rotation through chain 31 to rotate elevating screws 26 and 28 in unison.

Elevating screws 26 and 28 threadedly engage connector members 32 on lengths 12 extending between stanchions 16, 18 and a container 40 for particulate material.

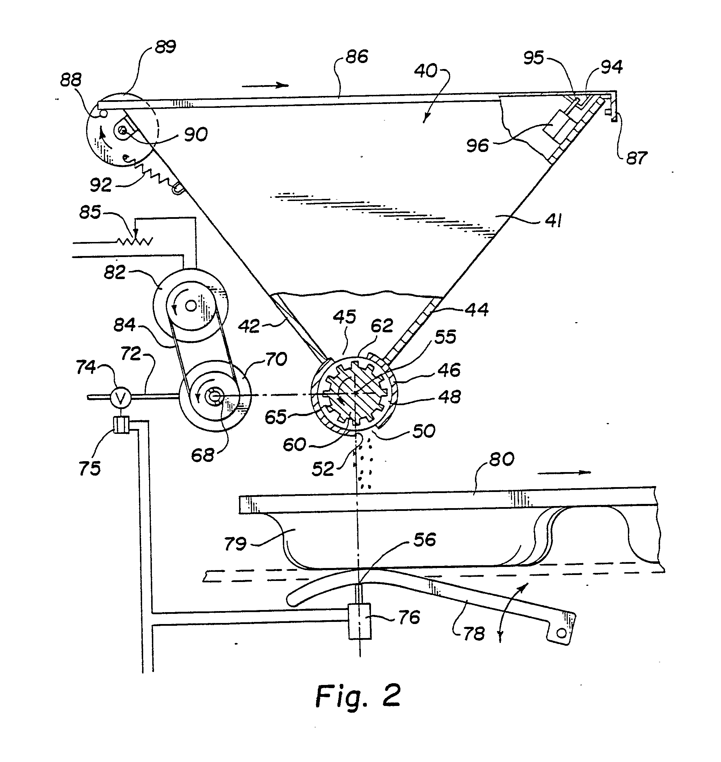

In the particular embodiment of the invention illustrated in Figures 1 and 2 of the drawing, container 40 comprises a hopper having side walls 42 and 44 converging downwardly toward an inlet passage 45 formed through the wall of a hollow tube 46 having a hollow bore 48 extending therethrough. An outlet passage 50 also extends through the wall of dispensing tube 46 and is substantially diametrically opposed to the inlet passage 45. The hopper 40 has end walls 41 and 43 extending between side walls 41 and 42. According to an alternate embodiment, an agitator can also be disposed within hopper 40 to assist in feeding particulate matter toward inlet passage 45.

Lengths 12 and 14 are arranged to form a parallel linkage such that rotation of hand wheel 30 moves the hopper 40 vertically relative to conveyor 20. Each top length 14 is preferably an extendable member and in the particular embodiment illustrated in Figure 1 of the drawing is an air cylinder having a piston slidably disposed therein, the rod end of the cylinder being connected to end walls 41 and 43 of the hopper. Thus, when the rod of the cylinder is extended hopper 40 is moved from the full outlying position illustrated in Figure 1 of the drawing to the position illustrated in dashed outline. As will herein be more fully explained, it is desirable to move the hopper to the position illustrated in dashed outline for removing the mandrel for adjusting the dispensing batter of the particulate material.

As best illustrated in Figures 2 and 3 of the drawing, a mandrel 60 has blocking collars 62 formed at spaced locations along the length thereof and opposite ends of the mandrel are supported by journals 63 and 64 rotatably supported in the bore 48 of dispensing tube 46. Collars 62 also serve as bearings spaced longitudinally of bore 48. Spline teeth 65 are formed on mandrel 60 between blocking collar 62 for forming dispensing sections in bore 48.

A quick release coupling 66 is secured to one end of mandrel 60 and is connectable to a coupling 68 on clutch 70 supported by end wall 43 of hopper 40.

Clutch 70 is preferably an air driven clutch to which pressurized air is supplied through air lines 72 and valves 74 connected to a suitable pressure source. Valve 74 is actuated by a solenoid 75 connected through a switch 76 to a source of electricity. Switch 76 is preferably actuated by a lever 78 which is engaged by compartment 79 of a tray 80 employed for cooking food products.

Clutch 70 is driven by a variable speed electric motor 82 through a chain or belt 84. The speed of motor 82 can be controlled by adjusting potentiometer 85 connected to a suitable source of electricity.

Hopper 40 is provided with a cover 86 having a hinge pin 88 pivotally secured in an opening in wheels 89, rotatably supported on axle 90 secured to wall 42 of hopper 40. As illustrated in Figure 2 of the drawing, wheel 89 is viced by spring 92 in a counterclockwise direction as viewed in Figure 2. Cover 86 is provided with a strike plate 94 having an opening formed therein to receive bolt 95 of latch 96 secured to wall 41 of hopper 40. Bolt 95 is spring urged to an extended position and strike plate 94 is shaped to urge bolt 45 inwardly until the bolt is aligned with the opening in strikeplate 94 at which time it will be spring urged outwardly to latch cover 86 in a closed position.

As illustrated in Figure 2, when cover 86 is closed spring 92 urges wheels 89 in a counterclockwise direction, thereby moving lip 87 on the edge of cover 86 into engagement with the upper edge of wall 44 of hopper 40 when bolt 95 is extended into the opening in strike plate 94. When wheel 89 is rotated in a clockwise direction, spring 92 will be extended and cover 86 will move to the right as illustrated in Figure 2 of the drawing, thereby moving lip 87 away from the upper edge of wall 44 and moving strike plate 94 out of engagement with bolt 95. After strike plate 94 has been disengaged from bolt 95, cover 86 can be rotated in a counterclockwise direction as illustrated in Figure 2 about hinge pin 88 to facilitate filling hopper 40 with particulate material.

When hopper 40 is pivoted to the position illustrated in dashed outline in Figure 1 of the drawing, it should be readily apparent that latch 96 will maintain cover 86 in a closed position to prevent spilling particulate material therefrom. When hopper 40 is in the position shown in dashed outline in Figure 1 of the drawing, mandrel 60 may be removed and replaced with another mandrel having a different number of blocking collars 62 formed thereon.

In the embodiment of mandrel 60 illustrated in Figure 3 of the drawing, four splined segments 65 are formed between blocking collar 62 such that four columns of particulate material will be dispensed simultaneously across conveyor 20. It should be readily apparent that mandrel 60 may be replaced with other mandrels by merely disengaging coupling 66. Additional mandrels may have different numbers of dispensing segments 65 formed thereon to adjust the pattern of particulate material which will be dispensed thereby.

Referring to Figure 2 of the drawing, switch 78 will be actuated intermittently to intermittently energize clutch 70. Spacing between the outer edges of spline teeth 65 and the inner wall of dispensing· tube 46 is maintained to prevent gravity flow of particulate material through the annular passage between mandrel 60 and the inner wall of dispensing tube 46 but is sufficiently great to prevent grinding or milling of the particulate material. Initial testing of the apparatus indicates that spacing between outer edges of teeth 65 and the inner wall of tube 46 should be at least as great as the diameter of the particulate material being dispensed and preferably in a range between $1\text{-}\frac{1}{2}$ and 2 times the diameter of individual particles. Edge 52 of outlet opening 50 formed in tube 46 should be substantially aligned with the axis 55 of rotation of mandrel 60 and contact 56 of switch 76 such that the particulate material will be dispensed adjacent the leading edge of an article moving adjacent switch 76 and dispensing will be terminated immediately adjacent the trailing edge of the article.

Other alterations and modifications of the invention will become apparent to one of ordinary skill in the art upon reading this disclosure in accordance with the accompanying drawings, and it is intended to cover all such alterations and modifications as fall within the scope of the appended claims.

**Claims**

1. A spreader for dispensing fragile particulate material onto an article carried by a conveyor comprising:-

a container (40) having an elongated opening formed therein;

a dispensing tube (46) having a hollow cylindrical bore, said tube extending longitudinally of said opening, said tube having longitudinally extending inlet (45) and outlet (50) passages formed therein, said inlet passage communicating with the inside of the container and with the bore of the tube and the exterior of the container:

a motor (82) associated with a generally cylindrical mandrel (60) and drivingly connected to intermittent drive means (70); and

said mandrel (60) being rotatably disposed in said bore, characterised by said mandrel being coaxial with said bore and being formed to divide the bore of the tube (46) into spaced dispensing sections separated by spaced blocking collars (62) on said mandrel, said blocking collars (62) having an outside diameter substantially equal to the diameter of the bore through the tube (46) to prevent passage of particulate material from one dispensing section longitudinally of the tube to an adjacent dispensing section;

means (65) on the surface of the mandrel extending radially therefrom between said blocking collars, said means (65) on the surface having a major diameter which is less than the diameter of the bore, the spacing between the major diameter of the mandrel (60) and the diameter of the bore being greater than the maximum dimension of individual particles of material being dispensed to prevent destruction of the particles being dispensed but being spaced sufficiently close together to prevent gravity flow of particles through the bore when the mandrel is not rotating;

sensor means (76,78) positioned to energize said intermittent drive means (70) when an article (79, 80) on the conveyor to receive particulate material is positioned in a predetermined relationship relative to said tube and to disengage said intermittent drive means (70) when the article on the conveyor is moved away from said pre-determined position.

2. A spreader according to claim 1 and in which said sensor means is associated with said motor (82) to intermittently energize said motor (82) when an article (80) to receive particulate material is positioned in a predetermined relationship relative to said tube and to de-energize said motor (82) when the article is moved away from said predetermined position.

3. A spreader according to claim 1 in which said motor (82) is a variable speed motor (82).

4. A spreader according to claim 1 and in which said container (40) is provided with:

a cover (86) on said container (40);

an axle (90) rotatably secured to said container;

a pair of wheels (89) secured for rotation about opposite ends of said axle;

hinge pins (88) secured to said cover (86) and pivotally secured adjacent the outer periphery of said wheels (89) such that rotation of the wheels imparts movement to the cover;

latch means (94, 95, 96) between said cover (86) and said container (40), said latch means being adapted to release an edge of the cover upon rotation of said wheels; and

means (92) resiliently urging said wheels to position said cover and said latch means for securing the cover relative to the container.

5. Apparatus according to claim 1 with the addition of support means (16);

means (14) pivotally securing said container (40) to said support means (16);

a pair of extendable links (26) secured between said support means (16) and said container (40) for rotating said container.

6. A spreader according to claim 1 said means (65) on the surface of the mandrel between the blocking collars comprising: spline teeth (65) on the surface of said mandrel (60).

7. A spreader according to claim 6 wherein spline teeth (65) have a major diameter equal to the diameter of said blocking collars (62) less a distance in a range of from 3 to 4 times the maximum dimension of the particles of particulate material to be dispensed.

8. A spreader according to claim 1 and in which said sensor means is associated with said motor (28) to intermittently energize said motor (82) when an article (80) to receive particulate material is positioned in a predetermined relationship relative to said tube and to de-energize said motor (82) when the article is moved away from said predetermined position.

9. A spreader according to claim 1 wherein said outlet (50) in said dispensing tube (46) has an edge (52) substantially aligned with the axis (55) of rotation of mandrel (60) and said sensor means (76, 78) such that material will be dispensed adjacent the leading edge of an article and dispensing will be terminated immediately adjacent the trailing edge of the article.

10. A spreader according to any preceding claim and in which said intermittent drive means (70) is a clutch.

**Patentansprüche**

1. Streugerät zur Ausgabe von zerbrechlichem Teilchenmaterial auf einen von einem Förderer getragenen Gegenstand, aufweisend:
— einen Behälter (40), der eine darin gebildete, längliche Öffnung besitzt;
— ein Ausgaberohr (46), das eine hohle zylindrische Bohrung besitzt, wobei sich das Rohr längs zur Öffnung erstreckt, wobei das Rohr sich längs erstreckende, in ihm ausgebildete Einlaß- und Auslaßdurchführungen (45, 50) besitzt, wobei die Einlaßdurchführung mit der Innenseite des Behälters und mit der Bohrung des Rohrs und der Außenseite des Behälters in Verbindung steht:
einen Motor (82), dem eine allgemein zylindrische Spindel (60) zugeordnet ist und der antriebsmäßig mit einer intermittierenden Antriebseinrichtung (70) verbunden ist; und
— wobei die Spindel (60) in der Bohrung drehbar angeordnet ist, gekennzeichnet durch die Tatsache, daß die Spindel koaxial mit der Bohrung ist und gebildet ist, um die Bohrung des Rohrs (46) in mit Abstand angeordnete, durch mit Abstand angeordnete Blockierrandelemente (62) auf der Spindel getrennte Ausgabeabschnitte aufzuteilen, wobei die Blockierrandelemente (62) einen Außendurchmesser im wesentlichen gleich dem Durchmesser der Bohrung durch das Rohr (46) besitzen, um das Durchtreten von Teilchenmaterial aus einem Ausgabeabschnitt längs zum Rohr zu einem benachbarten Ausgabeabschnitt zu verhindern;
— eine Einrichtung (65) auf der Oberfläche der Spindel, die sich von dort radial zwischen den Blockierrandelementen erstreckt, wobei die Einrichtung (65) auf der Oberfläche einen Hauptdurchmesser besitzt, der kleiner als der Durchmesser der Bohrung ist, wobei der Abstand zwischen dem Hauptdurchmesser der Spindel (60) und dem Durchmesser der Bohrung größer als die maximale Abmessung einzelner Materialteilchen ist, die ausgegeben werden, um eine Zerstörung der Teilchen, die ausgegeben werden, zu verhindern, aber mit ausreichend dichtem Abstand beieinander angeordnet sind, um eine Teilchenschwerkraftströmung durch die Bohrung zu verhindern, wenn sich die Spindel nicht dreht;
— eine Sensoreinrichtung (76, 78), die angeordnet ist, um die intermittierende Antriebseinrichtung (70) mit Energie zu speisen, wenn ein Gegenstand (79, 80) zur Aufnahme von Teilchenmaterial auf dem Förderer in einer vorbestimmten Beziehung in bezug auf das Rohr angeordnet ist, und die intermittierende Antriebseinrichtung (70) auszuschalten, wenn der Gegenstand auf dem Förderer von der vorbestimmten Position fort bewegt wird.

2. Streugerät nach Anspruch 1 und bei dem die Sensoreinrichtung dem Motor (82) zugeordnet ist, um den Motor (82) intermittierend mit Energie zu speisen, wenn ein Gegenstand (80) zur Aufnahme von Teilchenmaterial in einer vorbestimmten Beziehung in bezug auf das Rohr angeordnet ist, und den Motor (82) abzuschalten, wenn der Gegenstand von der vorbestimmten Position fort bewegt wird.

3. Streugerät nach Anspruch 1, bei dem der Motor (82) ein Motor (82) mit regelbarer Drehzahl ist.

4. Streugerät nach Anspruch 1 und bei dem der Behälter (40) versehen ist mit:
— einer Abdeckung (86) auf dem Behälter (40);
— einer drehbar am Behälter befestigten Achse (90);
— einem Paar von Rädern (89), die zur Drehung um entgegengesetzte Enden der Achse befestigt sind;
— Scharnierbolzen (88), die an der Abdeckung (86) befestigt sind und benachbart der äußeren Peripherie der Räder (89) derart schwenkbar befestigt sind, daß eine Drehung der Räder der Abdeckung eine Bewegung übermittelt;
— eine Riegeleinrichtung (94, 95, 96) zwischen der Abdeckung (86) und dem Behälter (40), wobei die Riegeleinrichtung geeignet ist, eine Kante der Abdeckung bei Drehung der Räder freizugeben; und
— eine Einrichtung (92) die die Räder elastisch zur Positionierung der Abdeckung und der Riegeleinrichtung antreibt, um die Abdeckung in bezug auf den Behälter zu befestigen.

5. Vorrichtung nach Anspruch 1 mit dem Zusatz einer Stützeinrichtung (16);
— einer Einrichtung (14), die den Behälter (40) schwenkbar an der Stützeinrichtung (16) befestigt;
— eines Paars auseinanderziehbarer Verbindungsstücke (26), die zwischen der Stützeinrichtung (16) und dem Behälter (40) zur Drehung des Behälters befestigt sind.

6. Streugerät nach Anspruch 1, wobei die Einrichtung (65) auf der Oberfläche der Spindel zwischen den Blockierrandelementen aufweist: Keilnutzähne (65) auf der Oberfläche der Spindel (60).

7. Streugerät nach Anspruch 6, bei dem die Keilnutzähne (65) einen Hauptdurchmesser gleich dem Durchmesser der Blockierrandelemente (62) abzüglich eines Abstandes in einen Bereich von 3 bis 4 mal die maximale Abmessung der Teilchen des auszugebenden Teilchenmaterials besitzen.

8. Streugerät nach Anspruch 1 und bei dem die Sensoreinrichtung dem Motor (28) zugeordnet ist, um den Motor (82) intermittierend mit Energie zu speisen, wenn ein Gegenstand (80) zur Aufnahme von Teilchenmaterial in einer vorbestimmten Beziehung in bezug auf das Rohr positioniert ist, und um den Motor (82) auszuschalten, wenn der Gegenstand von der vorbestimmten Position fort bewegt wird.

9. Streugerät nach Anspruch 1, bei dem der Auslaß (50) im Ausgaberohr (46) eine im wesentlichen mit der Drehachse (55) der Spindel (60) ausgerichtete Kante (52) und der Sensoreinrichtung (76, 78) besitzt derart, daß Material benachbart der Vorderkante eines Gegenstandes ausgegeben wird und die Ausgabe unmittelbar benachbart der Hinterkante des Gegenstandes beendet wird.

10. Streugerät nach einem beliebigen vorhergehenden Anspruch und bei dem die intermittierende Antriebseinrichtung (70) eine Kupplung ist.

**Revendications**

1. Répandeur de distribution de matériau particulaire fragile sur un article transporté par un convoyeur comprenant: un conteneur (40) comprenant une ouverture allongée à l'intérieur, un tube distributeur (46) muni d'un alésage cylindrique creux, ledit tube s'étendant longitudinalement à cette ouverture, ledit tube comprenant des passages d'entrée (45) et de sortie (50) disposés longitudinalement, agencés à l'intérieur, ledit passage d'entrée communiquant avec l'intérieur du conteneur et avec l'alésage du tube et l'extérieur du conteneur, un moteur (82) associé à un mandrin généralement cylindrique (60) et relié en entraînement à un moyen d'entraînement intermittent (70) et ledit mandrin (60) étant disposé en rotation dans ledit alésage, caractérisé en ce que ledit mandrin est coaxial audit alésage et est agencé pour diviser l'alésage du tube (46) en sections de distribution espacées, séparées par des colliers de blocage (62) espacés sur ledit mandrin, lesdits colliers de blocage (62) ayant un diamètre extérieur sensiblement égal au diamètre de l'alésage du tube (46) pour éviter le passage de matériau particulaire d'une section de distribution, longitudinalement au tube, vers une section de distribution adjacente, des moyens (65) à la surface du mandrin, s'étendant radialement à partir de celui-ci entre lesdits colliers de blocage, lesdits moyens (65) ayant à la surface un grand diamètre inférieur au diamètre de l'alésage, l'espacement entre le grand diamètre du mandrin (60) et le diamètre de l'alésage étant supérieur à la dimension maximale des particules individuelles du matériau répandu pour empêcher la destruction des particules répandues, mais avec un espacement mutuel suffisamment rapproché pour empêcher l'écoulement par gravité des particules au travers de l'alésage quand le mandrin ne tourne pas, des moyens de détection (76, 78) positionnés pour exciter ledit moyen d'entraînement intermittent (70) quand un article (79, 80) sur le convoyeur, devant recevoir le matériau particulaire, est positionné dans une relation prédéterminée par rapport audit tube et pour dégager ledit moyen d'entraînement intermittent (70) quand l'article du convoyeur est déplacé à l'écart de ladite position prédéterminée.

2. Répandeur selon la revendication 1, dans lequel ledit moyen de détection est associé audit moteur (82) pour exciter par intermittences ledit moteur (82) lorsqu'un article (80) devant recevoir du matériau particulaire est positionné dans une relation prédéterminée par rapport audit tube et pour dés exciter ledit moteur (82) quand l'article est déplacé à l'écart de ladite position prédéterminée.

3. Répandeur selon la revendication 1, dans lequel ledit moteur (82) est un moteur à vitesse variable (82).

4. Répandeur selon la revendication 1, dans lequel ledit conteneur (40) est pourvu d'un couvercle (86) sur ledit conteneur (40), d'un axe (90) bloqué en rotation sur ledit conteneur, d'une paire de roues (89) bloquées en rotation sur les côtés opposés dudit axe, d'axes d'articulation (88) fixés audit couvercle (86) et bloqués en rotation, adjacents à la périphérie extérieure desdites roues (89), de manière que la rotation des roues communique un mouvement au couvercle, des moyens en forme en verrou (94, 95, 96) entre ledit couvercle (86) et ledit conteneur (40), lesdits moyens en forme en verrou étant adaptés pour libérer un bord de couvercle lors de la rotation desdites roues, et des moyens (92) pour contraindre élastiquement lesdites roues afin de positionner ledit couvercle et ledit moyen en forme de verrou afin de bloquer le couvercle par rapport au conteneur.

5. Appareil conforme à la revendication 1, avec l'addition d'un moyen de support (16), de moyens (14) bloquant en rotation ledit conteneur (40) sur ledit moyen de support (16), une paire d'articulations extensibles (26) fixées entre ledit moyen de support (16) et ledit conteneur (40) pour faire tourner ledit conteneur.

6. Répandeur selon la revendication 1, lesdits moyens (65) à la surface du mandrin entre les colliers de blocage, comprenant des dents en forme en cannelures (65) à la surface dudit mandrin (60).

7. Répandeur selon la revendication 6, dans lequel les dents en forme en cannelures (65) ont un grand diamètre égal au diamètre desdits colliers de blocage (62) moins une distance comprise dans une gamme de 3 à 4 fois la dimension maximale des particules du matériau particulaire à répandre.

8. Répandeur selon la revendication 1, dans lequel ledit moyen détecteur est associé audit moteur (28) pour exciter de façon intermittente ledit moteur (82) quand un article (80) devant recevoir du matériau particulaire est positionné dans une relation prédéterminée par rapport audit tube et pour désexciter ledit moteur (82) quand l'article est déplacé hors de ladite position prédéterminée.

9. Répandeur selon la revendication 1, dans lequel ladite ouverture (50) dudit tube distributeur

EP 0 139 703 B1

(46) comprend un bord (52) sensiblement aligné à l'axe (55) de rotation du mandrin (60) et lesdits moyens détecteurs (76, 78), de telle sorte que le matériau soit distribué à proximité du bord d'attaque d'un article et que la distribution soit terminée à proximité immédiate du bord de fuite de l'article.

10. Répandeur selon l'une quelconque des précédentes revendications et dans lequel ledit moyen d'entraînement intermittent (70) est un embrayage.

7

Fig. 1

Fig. 3

Fig. 2